# EUROPEAN PATENT SPECIFICATION

(11) **EP 4 446 596 B1**
(45) Date of publication and mention of the grant of the patent: **13.05.2026**
(21) Application number: 22903859.1
(22) Date of filing: 14.10.2022
(51) Int. Cl.: F15B 15/10, F16L 13/14, F15B 15/14

(54) **HYDRAULIC ACTUATOR**
HYDRAULISCHER AKTUATOR
ACTIONNEUR HYDRAULIQUE

(30) Priority: 08.12.2021 JP 2021199208
(43) Date of publication of application: 16.10.2024
(73) Proprietor: BRIDGESTONE CORPORATION, Chuo-ku Tokyo 104-8340 (JP)
(72) Inventor: OONO, Shingo, Chuo-ku, Tokyo (JP)
(74) Representative: Marks & Clerk LLP
(86) International application number: PCT/JP2022/038434
(87) International publication number: WO 2023/105925

(56) References cited:
- WO-A1-2015/097895
- JP-A- 2005 315 381
- JP-A- 2018 035 930
- JP-A- 2018 108 814
- JP-A- 2020 097 953
- US-B2- 11 131 329

## Description

### [Technical Field]

The present invention relates to a fluid pressure actuator that expands and contracts a tube using a gas or liquid, and more particularly to a so-called McKibben type fluid pressure actuator.

### [Background Art]

Conventionally, a structure (so-called McKibben type) having a rubber tube (tubular body) that expands and contracts by air pressure and a sleeve (mesh reinforcing structure) that covers the outer peripheral surface of the tube is widely used as a fluid pressure actuator that expands and contracts the tube as described above.

Both ends of the actuator body portion constituted by the tube and the sleeve are sealed using a sealing member formed of metal.

The sleeve is a cylindrical structure in which a high-tension fiber such as a polyamide fiber or a metal cord is woven, and the expansion motion of the tube is restricted to a predetermined range.

In order to prevent the sleeve from pulled out of the sealing member due to the load during the operation of the fluid pressure actuator of the McKibben type, a structure is known in which the sleeve is locked to a flange portion formed on the sealing member using a locking member (locking ring) (For example, Patent Literatures 1 and 2).

### [Citation List]

### [Patent Literature]

[Patent Literature 1]
   Japanese Patent Laid-Open No. 2018-035930
[Patent Literature 2]
   JP 2020 097953 A

### [Summary of Invention]

According to the structure using the aforementioned locking member, the failure of the fluid pressure actuator can be prevented, and the durability of the fluid pressure actuator can be improved.

However, there are cases where high pressure is applied to the fluid pressure actuator (such as when the actuator is hydraulically driven), and higher durability has been required.

Therefore, the following invention has been made in view of such a situation, and it is an object of the present invention to provide a fluid pressure actuator which can more reliably prevent the sleeve from being pulled out of the sealing member while using a locking member for locking the sleeve.

An embodiment of the present invention is a fluid pressure actuator including an actuator body portion comprising a tube having a cylindrical shape and that is configured to expand and contract under pressure of a fluid, and a sleeve that is a structure in which cords oriented in a predetermined direction are woven and covers an outer peripheral surface of the tube, and a sealing mechanism that seals the end of the actuator body portion in the axial direction of the actuator body portion. The sealing mechanism includes a sealing member onto which the actuator body portion is inserted, a restricting member provided on an outer peripheral surface of the actuator body portion inserted onto the sealing member and that restricts the actuator body portion, and a locking member that locks the sleeve to the sealing member,

The sealing member includes a body portion onto which the tube is inserted, a head portion provided further outside than the body portion in the axial direction, and an intermediate portion provided between the body portion and the head portion.

The intermediate portion is smaller in size in the radial direction of the actuator body portion than the head portion and has an enlarged diameter part that is larger than the body portion toward the radial direction outside of the actuator body portion. The locking member is configured to be compressed and deformed to fill a space formed between the restricting member and the intermediate portion. The locking member is formed of a material having an anisotropy in which the strength in the axial direction D_{AX} is lower than that in the radial direction D_{R} to facilitate compressive deformation in the axial direction.

### [Brief Description of Drawings]

[FIG. 1] FIG. 1 is a side view of a fluid pressure actuator 10.
[FIG. 2] FIG. 2 is a partially enlarged perspective view of the fluid pressure actuator 10.
[FIG. 3] FIG. 3 is a partially sectional view along the axial direction D_{AX} of a sealing mechanism 200.
[FIG. 4] FIG. 4 is a partially sectional view along the axial direction D_{AX} of the sealing mechanism 200 before a caulking ring 230 is caulked.
[FIG. 5] FIG. 5 is a partially sectional view along the axial direction D_{AX} of a sealing mechanism 200 A for modified example.

### [Description of Embodiments]

Hereinafter, the embodiment will be described based on the drawings. The same functions and structures are denoted by the same or similar reference numerals, and the description thereof will be omitted accordingly.

### (1) Overall schematic configuration of the fluid pressure actuator

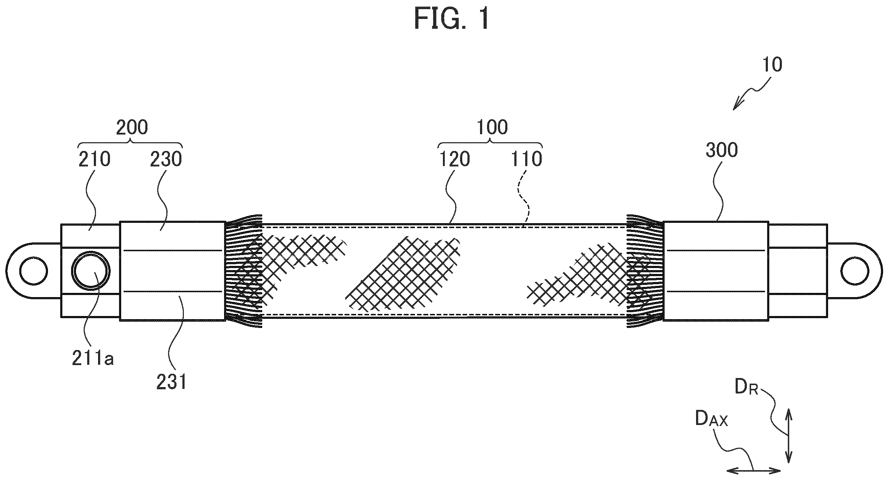

FIG. 1 is a side view of the fluid pressure actuator 10 according to the present embodiment. As shown in FIG. 1, the fluid pressure actuator 10 includes an actuator body portion 100, a sealing mechanism 200, and a sealing mechanism 300.

The sealing mechanism 200 and the sealing mechanism 300 seal both ends of the actuator body portion 100 in the axial direction D_{AX}. Specifically, the sealing mechanism 200 includes a sealing member 210 and a caulking ring 230. The sealing member 210 seals the end of the axial direction D_{AX} of the actuator body portion 100. The caulking ring 230 also caulks the actuator body portion 100 together with the sealing member 210. On the outer peripheral surface of the caulking ring 230, an indentation 231 is formed, which is a mark where the caulking ring 230 is caulked by a jig.

The difference between the sealing mechanism 200 and the sealing mechanism 300 is whether or not a connection port 211a for fluid is provided.

The actuator body portion 100 is constituted by a tube 110 and a sleeve 120. Fluid flows into the actuator body portion 100 through the connection port 211a.

The actuator body portion 100 contracts in the axial direction D_{AX} of the actuator body portion 100 and expands in the radial direction D_{R} due to fluid flow into the tube 110. The actuator body portion 100 expands in the axial direction D_{AX} of the actuator body portion 100 and contracts in the radial direction D_{R} due to the outflow of fluid from the tube 110. Due to the shape change of the actuator body portion 100, the fluid pressure actuator 10 functions as an actuator.

The fluid used for driving the fluid pressure actuator 10 can be either a gas such as air or a liquid such as water or mineral oil, but in particular, the fluid pressure actuator 10 has high durability that can withstand hydraulic driving under high pressure applied to the actuator body portion 100.

In addition, the fluid pressure actuator 10 is a so-called McKibben type, and can be used not only for artificial muscles, but also suitably for a robot limb (such as an upper limb or a lower limb) for which higher performance (contraction force) is required.

In addition, the fluid pressure actuator 10 can also be used as a body-worn power assist device, a gait assist device, and a training device such as muscle strength.

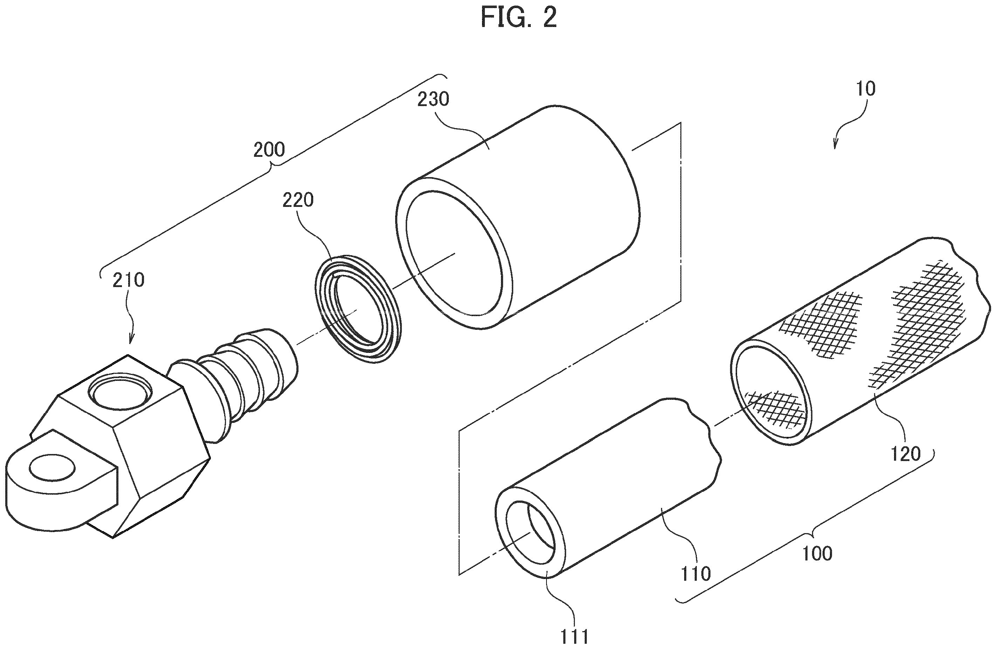

FIG. 2 is a partially enlarged perspective view of the fluid pressure actuator 10. As shown in FIG. 2, the fluid pressure actuator 10 includes an actuator body portion 100 and a sealing mechanism 200.

As described above, the actuator body portion 100 comprises a tube 110 and a sleeve 120.

The tube 110 is a cylindrical body that expands and contracts under fluid pressure. The tube 110 is made of an elastic material such as butyl rubber to repeatedly contract and expand under fluid pressure. The inner diameter Φ of the tube 110 is not particularly limited, but in this embodiment, it is about 10 mm.

When the fluid pressure actuator 10 is hydraulically driven, the material of the tube 110 may be NBR (nitrile rubber) having high oil resistance or at least one kind selected from the group consisting of NBR, hydrogenated NBR, chloroprene rubber, and epichlorohydrin rubber.

The sleeve 120 is cylindrical and covers the outer peripheral surface of the tube 110. The sleeve 120 is a structure in which cords oriented in a predetermined direction are woven, and a rhombic shape is repeated by crossing the oriented cords. By having such a shape, the sleeve 120 deforms pantographically and follows the tube 110 while restricting its contraction and expansion.

As a cord constituting the sleeve 120, a fiber cord of an aromatic polyamide (aramid fiber) or polyethylene terephthalate (PET) is preferably used. However, it is not limited to this kind of fiber cord, and for example, a metal cord composed of a high-strength fiber such as a PBO fiber (polyparaphenylene benzobisoxazole) or an extra-fine filament may be used.

The sealing mechanism 200 seals the end of the actuator body portion 100 in the axial direction D_{AX}. The sealing mechanism 200 is constituted by a sealing member 210, a locking wire 220 and a caulking ring 230.

The actuator body portion 100 is inserted onto the sealing member 210. Metal such as stainless steel may be suitably used as the sealing member 210, but it is not limited to such metal, and a hard plastic material may be used.

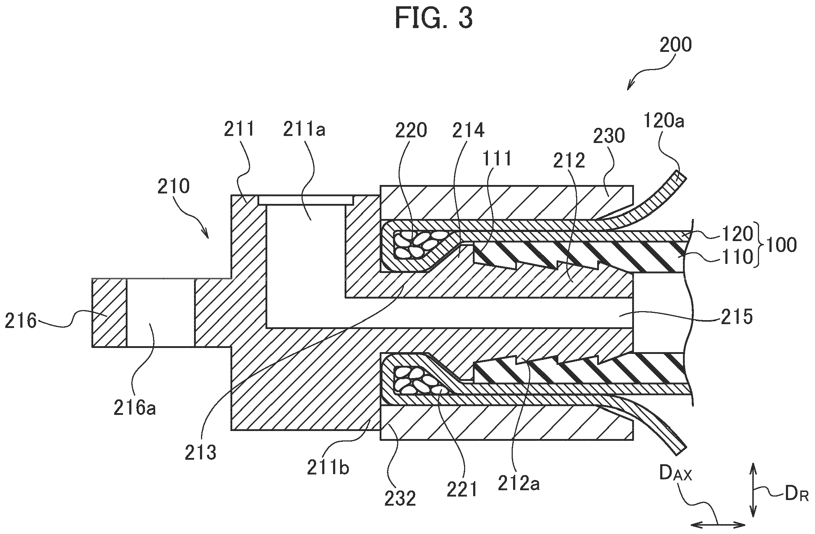

The locking wire 220 locks the sleeve 120 to the sealing member 210. In this embodiment, the locking wire 220 constitutes a locking member. Specifically, the sleeve 120 is folded back to the radial direction D_{R} outside via the locking wire 220 (Not shown in FIG. 2, see FIG. 3).

In this embodiment, the locking wire 220 is formed by winding a wire having a diameter of about 1 mm several times.

For example, the locking wire 220 may be formed of a metallic material, but preferably of a material that is relatively soft and rich in ductility and ductility, for example, a material containing aluminum (e.g., an aluminum alloy). The member forming the locking wire 220 is preferably more easily deformed than the member forming the sealing member 210, and more preferably more easily deformed than the member forming the caulking ring 230.

The same metal as the sealing member 210 or the same metal as the caulking ring 230 may be used as the locking wire 220.

The locking wire 220 is formed of a material (not necessarily limited to a metal) having a hardness that is deformed by caulking together with the caulking ring 230 as described later. Alternatively, the locking wire 220 (locking member) may be formed of a ring-shaped member.

The caulking ring 230 is provided on the outer peripheral surface of the actuator body portion 100 inserted onto the sealing member 210 to restrict the actuator body portion 100. In this embodiment, the caulking ring 230 constitutes a restricting member.

The caulking ring 230 caulks the actuator body portion 100 together with the sealing member 210. Metals such as aluminum alloy, brass and iron can be used as the caulking ring 230. When the caulking ring 230 is caulked by the caulking jig, the indentation 231 (see FIG. 1) is formed.

The caulking jig is not particularly limited, but by caulking a plurality of dies (For example, a die divided into seven parts on the circumference) in contact with the outer circumferential surface of the caulking ring 230 in the radial inside, the actuator body portion 100 is restricted to form the linear indentation 231 along the axial direction D_{AX}.

### (2) Configuration of the sealing mechanism

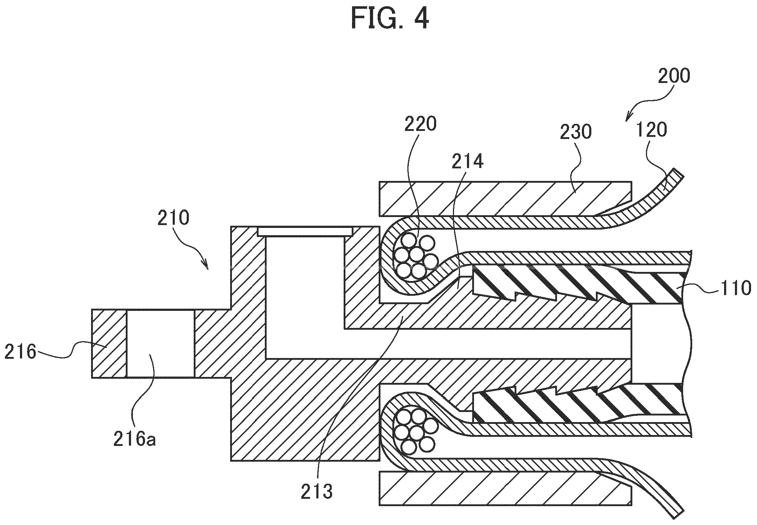

Next, a specific configuration of the sealing mechanism 200 will be described with reference to FIGS. 3 and 4. FIG. 3 is a partial cross-sectional view of the sealing mechanism 200 along the axial direction D_{AX}. FIG. 4 is a partial cross-sectional view of the sealing mechanism 200 along the axial direction D_{AX} before the caulking ring 230 is caulked.

As shown in FIGS. 3 and 4, the sealing member 210 includes a head portion 211, a body portion 212, and an intermediate portion 213.

The head portion 211 is provided further outside than the body portion 212 in the axial direction D_{AX}. The connection port 211a is formed in the head portion 211.

The connection port 211a is connected to a hose (pipeline) connected to a driving pressure source of the fluid pressure actuator 10, specifically, a gas or liquid compressor.

Further, the head portion 211 has an abutting surface 211b abutting to an end surface 232 of the caulking ring 230 in the axial direction D_{AX}. The abutting surface 211b is a flat surface that can be in face contact with the end surface 232.

The body portion 212 is a part onto which the tube 110 (see FIGS. 1 and 2) is inserted. Specifically, the body portion 212 is in contact with the inner peripheral surface of the tube 110 inserted onto the sealing member 210.

A stepped part 212a is formed on the outer peripheral surface of the body portion 212 to make it difficult for the tube 110 to be removed from the sealing member 210. The stepped part 212a is protruded toward the radial direction D_{R} outside so as to be resistant to the pulling direction of the tube 110 from the body portion 212.

The intermediate portion 213 is provided between the body portion 212 and the head portion 211. The intermediate portion 213 has a smaller size in the radial direction D_{R} than the head portion 211. Note that only a part of the intermediate portion 213 in the axial direction D_{AX} may have a smaller size in the radial direction D_{R} than the head portion 211.

For example, the intermediate portion 213 near the head portion 211 in the axial direction D_{AX} may have a smaller size in the radial direction D_{R} than the head portion 211, and the intermediate portion 213 near the body portion 212 may have the same or slightly larger size in the radial direction D_{R} than the head portion 211. In this embodiment, the diameter Φ of the intermediate portion 213 near the head portion 211 is about 8 mm.

The intermediate portion 213 may be interpreted as a region in the axial direction D_{AX} from the position of the end face 232 of the caulking ring 230 to outside end of the tube 110 inserted onto the body portion 212.

The intermediate portion 213 has an enlarged diameter part 214 that is larger than the body portion 212 toward the radial outside of the actuator body portion 100. The locking wire 220 with the sleeve 120 folded back may be locked by the enlarged diameter part 214. That is, the diameter formed by the locking wire 220 is smaller than the diameter of the enlarged diameter part 214.

The enlarged diameter part 214 is more convex in the radial direction D_{R} outside than the body portion 212. The diameter expanding part 214 may be enlarged from the head portion 211 toward the body portion 212. That is, the intermediate portion 213 may have a portion that gradually increases in diameter (diameter size) from the head portion 211 toward the body portion 212. In other words, the intermediate portion 213 may have a portion that becomes tapered in the cross section shown in FIG. 3. The portion that becomes tapered may be interpreted as the enlarged diameter part 214.

As described above, since the intermediate portion 213 has an enlarged diameter part 214 that increases in diameter from the head portion 211 toward the body portion 212, the distance between the caulking ring 230 (restricting member) and the intermediate portion 213 decreases from the head portion 211 toward the body portion 212.

In this embodiment, the maximum diameter Φ of the enlarged diameter part 214 is about 13 mm. As described above, since the diameter Φ of the intermediate portion 213 near the head portion 211 is about 8 mm, the step difference between the enlarged diameter part 214 and the intermediate portion 213 near the head portion 211 is about 2.5 mm.

A through hole 215 is formed inside the sealing member 210 along the axial direction D_{AX}. The through hole 215 communicates with the connection port 211a, and fluid flows into the actuator body portion 100 through the through hole 215. In this embodiment, the diameter Φ of the through hole 215 is about 3 mm.

The sealing member 210 is provided with a connecting portion 216. Specifically, the connecting portion 216 is provided in the axial direction D_{AX} outside of the head portion 211. An engagement hole 216a is formed in the connecting portion 216 for engaging a member constituting a device using the fluid pressure actuator 10.

As described above, the tube 110 is inserted onto the body portion 212. As described above, the enlarged diameter part 214 abuts an end surface 111 (see also FIG. 2) of the tube 110. In addition, the stepped part 212a more reliably prevents the actuator body portion 100 from being pulled out from the body portion 212 by clamped together with the sealing member 210 by the caulking ring 230 thereby ingrowing the inner circumferential surface of the tube 110.

The locking wire 220 is provided on the outer circumferential surface of the sleeve 120 and formed by winding the wire around the outer circumferential surface of the intermediate portion 213. The sleeve 120 is folded back to the center side of the axial direction D_{AX} via the locking wire 220. That is, an end portion of the sleeve 120 in the axial direction D_{AX} is folded back via the locking wire 220 (locking member).

Specifically, the sleeve 120 has a folded back portion 120a folded back via the locking wire 220. The folded back part 120a is folded back into the radial direction D_{R} outside via the locking wire 220 and abuts against the inner circumferential surface of the caulking ring 230.

As described above, the caulking ring 230 abuts the abutting surface 211b of the head portion 211 against the end surface 232 of the caulking ring 230. Specifically, the abutting surface 211b is in face contact with the end surface 232.

The caulking ring 230 fixes the actuator body portion 100 to the sealing member 210 by caulking the sleeve 120 folded back via the tube 110 and the locking wire 220 together with the sealing member 210.

When the locking wire 220 is caulked together with the actuator body portion 100 by a jig that caulks the caulking ring 230, it is compressed and deformed to fill the space formed between the caulking ring 230 and the intermediate portion 213.

More specifically, from the state shown in FIG. 4, when the locking wire 220 is caulked by the jig, it is deformed so as to collapse, and the space between the caulking ring 230 and the intermediate portion 213 is deformed so as to reduce the gap.

As a result, at least a part of the locking wire 220 is deformed by compression, and a compression deformed portion 221 is formed. More of the compression deformed portion 221 may be formed in a region near the body portion 212 where the distance between the caulking ring 230 and the intermediate portion 213 becomes narrow.

The locking wire 220 is formed of a material having an anisotropy in which the strength in the axial direction D_{AX} is lower than that in the radial direction D_{R} in consideration of such ease of compressive deformation.

Further, the volume (A) of the space between the caulking ring 230 and the intermediate portion 213 and the volume (B) of the locking wire 220 and the sleeve 120 are preferably 0.5 A<B<1.5 A, and more preferably 0.8 A<B<1.2 A, when the space is sufficiently filled and the pull-out prevention of the sleeve 120 is taken into consideration.

### (3) Function and Effects

According to the above-described embodiment, the following function and effects can be obtained. Specifically, the intermediate portion 213 of the sealing mechanism 200 has a smaller size in the radial direction D_{R} of the actuator body portion 100 than the head portion 211. The enlarged diameter part 214 which expands toward the radial direction D_{R} outside of the actuator body portion 100 rather than the body portion 212 is provided. The locking wire 220 is compressed and deformed to fill the space formed between the caulking ring 230 and the intermediate portion 213.

As described above, when the sleeve 120 folded back via the tube 110 and the locking wire 220 is engaged with the sealing member 210, the locking wire 220 is deformed, and the sleeve 120 can be more surely prevented from slipping out of the locking wire 220, and the sleeve 120 is difficult to be pulled out.

That is, the fluid pressure actuator 10 can more surely prevent the sleeve 120 from being pulled out of the sealing member 210 while using the locking member (the locking wire 220) for engaging the sleeve 120.

If the combined volume (B) of the volume of the locking wire 220 and the volume of the sleeve 120 surrounding the locking wire 220 is small relative to the volume (A) of the void surrounded by the caulking ring 230 and the intermediate portion 213 (the sealing member 210), when a force is applied to the axial direction D_{AX} after caulking, the caulking ring 230, the sleeve 120, and the locking wire 220 are pulled by the axial direction D_{AX}, and a gap is formed between the sealing member 210.

As a result, the length of the fluid pressure actuator 10 changes. On the other hand, if the volume (B) of the locking wire 220 and the sleeve 120 is too large, the locking wire 220 interferes with the caulking ring 230 at the time of caulking, thereby inhibiting the deformation of the locking wire 220 and generating a shape distortion. Both problems can be solved by making the volume of the locking wire 220 an appropriate range.

In the present embodiment, the enlarged diameter part 214 of the sealing member 210 increases from the head portion 211 toward the body portion 212. In other words, the distance between the caulking ring 230 and the intermediate portion 213 decreases from the head portion 211 toward the body portion 212.

Therefore, the space between the caulking ring 230 and the intermediate portion 213 can be reduced as it goes toward the center of the axial direction D_{AX}, and the locking wire 220 can be more easily deformed when caulking. As a result, the sleeve 120 can be secured from the sealing member 210.

The locking wire 220 is formed of a material having an anisotropy in which the strength in the axial direction D_{AX} is lower than the strength in the radial direction D_{R}, for example, a material containing at least either copper or lead.

Thus, the compressive deformation in the axial direction D_{AX} of the locking wire 220 is facilitated, and the space between the caulking ring 230 and the intermediate portion 213 can be filled more reliably. Thus, the sleeve 120 can be prevented from pulled out of the sealing member 210 more surely.

In this embodiment, the locking wire 220 is formed by winding the wire around the outer peripheral surface of the intermediate portion 213. Therefore, the locking wire 220 can be easily formed in an annular shape, and the caulking work of the actuator body portion 100 can be facilitated.

In this embodiment, the end of the sleeve 120 in the axial direction D_{AX} is folded back via the locking wire 220. Therefore, it is possible to more reliably prevent the sleeve 120 from being pulled out from the sealing member 210.

### (4) Other Embodiments

Although the embodiments have been described above, they are not limited to the description of the embodiments, and it is obvious to those skilled in the art that various modifications and improvements can be made.

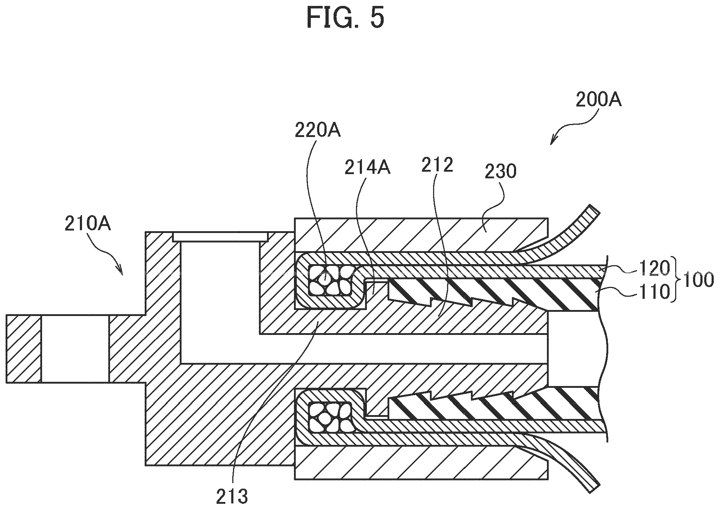

For example, the sealing mechanism 200 may be modified as follows. FIG. 5 is a partial cross-sectional view along the axial direction D_{AX} of the sealing mechanism 200 A for modified example.

As shown in FIG. 5, the sealing mechanism 200 A includes a sealing member 210 A and a locking wire 220 A. In the sealing member 210 A, the shape of the enlarged diameter part 214 A is different from the enlarged diameter part 214 described above. Although the enlarged diameter part 214 has a shape that increases in diameter toward the center of the axial direction D_{AX} (body portion 212), it may have a uniform diameter size in the axial direction D_{AX}, as in the enlarged diameter part 214 A.

The locking wire 220 A is the same as the locking wire 220 described above. However, the volume of the locking wire 220 A may be changed according to the shape (space between the caulking ring 230 and the intermediate portion 213) of the sealing member 210 A. Even in the case of the sealing mechanism 200 A, the locking wire 220 A can be compressed and deformed during caulking to fill the space. As a result, it is possible to more reliably prevent the sleeve 120 from being pulled out from the sealing member 210.

In the above-described embodiment, the end of the sleeve 120 in the axial direction D_{AX} is folded back via the locking wire 220, but the end may not necessarily be folded back via the locking wire 220.

In the above-described embodiment, the locking wire 220 is formed by winding the wire multiple times, but the locking member may be formed by a ring-shaped member instead of the locking wire 220.

Although the present invention has been described in detail, it is clear to those skilled in the art that the present invention is not limited to the embodiments described herein. The present invention may be implemented in a modified manner without departing from the scope of the present invention as determined by the scope of claims. Accordingly, the description of the present invention is for illustrative purposes and does not have any restrictive meaning to the present invention.

### [Reference Signs List]

10 Fluid Pressure Actuator
100 Actuator body portion
110 Tube
111 End surface
120 Sleeve
120a Folded back part
200, 200 A Sealing mechanism
210, 210 A Sealing member
211 Head portion
211a Connection port
211b Abutting surface
212 Body portion
212a Stepped part
213 Intermediate portion
214, 214 A Enlarged diameter part
215 Through hole
216 Connecting portion
216a Engagement hole
220, 220 A Locking wire
221 Compression deformed portion
230 Caulking ring
231 Indentation
232 End surface
233 Chamfer
300 Sealing mechanism

## Claims

1. A fluid pressure actuator (10) comprising:
an actuator body portion (100) comprising a tube (110) having a cylindrical shape and that is conf igured to expand and contract under pressure of a fluid, and a sleeve (120) that is a structure in which cords oriented in a predetermined direction are woven and covers an outer peripheral surface of the tube (110); and
a sealing mechanism (200, 200A) that seals the end of the actuator body portion (100) in the axial direction (D_{AX}) of the actuator body portion (100),
wherein
the sealing mechanism (200, 200A) comprises:
a sealing member (210, 210A) onto which the actuator body portion (100) is inserted;
a restricting member (230) provided on an outer peripheral surface of the actuator body portion (100) inserted onto the sealing member (210, 210A) and that restricts the actuator body portion (100); and
a locking member (220) that locks the sleeve (120) to the sealing member (210, 210A),
the sealing member (210, 210A) comprises:
a body portion (212) onto which the tube (110) is inserted;
a head portion (211) provided further outside than the body portion (212) in the axial direction (D_{AX}) and
an intermediate portion (213) provided between the body portion (212) and the head portion (211), wherein
the intermediate portion (213):
is smaller in size in the radial direction (D_{R}) of the actuator body portion (100) than the head portion (211); and
has an enlarged diameter part (214, 214A) that is larger than the body portion (212) toward the radial direction outside of the actuator body portion (100), and
the locking member (220) is configured to be compressed and deformed to fill a space formed between the restricting member (230) and the intermediate portion (213),
**characterized in that** the locking member (220) is formed of a material having an anisotropy in which the strength in the axial direction (D_{AX}) is lower than that in the radial direction (D_{R}) to facilitate compressive deformation in the axial direction (D_{AX}).

2. The fluid pressure actuator (10) according to claim 1, wherein the enlarged diameter part (214, 214A) increases in diameter from the head portion (211) toward the body portion (212).

3. The fluid pressure actuator (10) according to claim 1 or 2, wherein the distance between the restricting member and the intermediate portion (213) decreases in diameter from the head portion (211) toward the body portion (212).

4. The fluid pressure actuator (10) according to any one of claims 1 to 3, wherein the locking member is formed of a material containing aluminum.

5. The fluid pressure actuator (10) according to any one of claims 1 to 4, wherein the locking member is formed by winding a wire (220, 220A) around an outer peripheral surface of the intermediate portion (213).

6. The fluid pressure actuator (10) according to any one of claims 1 to 5, wherein an end portion of the sleeve (120) in the axial direction is folded back via the locking member.

## Patentansprüche

1. Fluiddruck-Betätigungsvorrichtung (10), umfassend:
einen Betätigungsvorrichtungskörperabschnitt (100), der ein Rohr (110) umfasst, das eine zylindrische Form aufweist, und so konfiguriert ist, dass er sich unter dem Druck eines Fluids ausdehnt und zusammenzieht,
und eine Hülse (120), die eine Struktur ist, in der Kordeln, die in einer vorbestimmten Richtung ausgerichtet sind, gewoben sind und eine äußere Umfangsfläche des Rohrs (110) bedecken; und
einen Dichtungsmechanismus (200, 200A), der das Ende des Betätigungsvorrichtungskörperabschnitts (100) in der Axialrichtung (D_{AX}) des Betätigungsvorrichtungskörperabschnitts (100) abdichtet,
wobei
der Dichtungsmechanismus (200, 200A) umfasst:
ein Dichtungselement (210, 210A), auf das der Betätigungsvorrichtungskörperabschnitt (100) eingesetzt wird;
ein Begrenzungselement (230), das an einer äußeren Umfangsfläche des auf das Dichtungselement (210, 210A) aufgesetzten Betätigungsvorrichtungskörperabschnitts (100) bereitgestellt ist und den Betätigungsvorrichtungskörperabschnitt (100) begrenzt; und
ein Verriegelungselement (220), das die Hülse (120) mit dem Dichtungselement (210, 210A) verriegelt,
wobei das Dichtungselement (210, 210A) umfasst:
einen Körperabschnitt (212), in den das Rohr (110) eingesetzt ist;
einen Kopfabschnitt (211), der in der Axialrichtung (D_{AX}) weiter außerhalb des Körperabschnitts (212) bereitgestellt ist und
ein Zwischenabschnitt (213), der zwischen dem Körperabschnitt (212) und dem Kopfabschnitt (211) bereitgestellt ist, wobei
der Zwischenabschnitt (213):
in der radialen Richtung (D_{R}) des Betätigungsvorrichtungskörperabschnitts (100) kleiner als der Kopfabschnitt (211) ist; und
einen Teil mit vergrößertem Durchmesser (214, 214A) aufweist, der zur radialen Richtung hin außerhalb des Betätigungsvorrichtungskörperabschnitts (100) größer ist als der Körperabschnitt (212), und
wobei das Verriegelungselement (220) konfiguriert ist, um zusammengedrückt und verformt zu sein, um einen Raum auszufüllen, der zwischen dem Begrenzungselement (230) und dem Zwischenabschnitt (213) gebildet ist,
**dadurch gekennzeichnet, dass** das Verriegelungselement (220) aus einem Material gebildet ist, das eine Anisotropie aufweist, bei der die Festigkeit in der Axialrichtung (D_{AX}) geringer ist als die in der radialen Richtung (D_{R}), um Druckverformung in der Axialrichtung (D_{AX}) zu erleichtern.

2. Fluiddruck-Betätigungsvorrichtung (10) nach Anspruch 1, wobei der Teil mit vergrößertem Durchmesser (214, 214A) vom Kopfabschnitt (211) zum Körperabschnitt (212) hin zunimmt.

3. Fluiddruck-Betätigungsvorrichtung (10) nach Anspruch 1 oder 2, wobei der Abstand zwischen dem Begrenzungselement und dem Zwischenabschnitt (213) vom Kopfabschnitt (211) zum Körperabschnitt (212) hin im Durchmesser abnimmt.

4. Fluiddruck-Betätigungsvorrichtung (10) nach einem der Ansprüche 1 bis 3, wobei das Verriegelungselement aus einem aluminiumhaltigen Material gebildet ist.

5. Fluiddruck-Betätigungsvorrichtung (10) nach einem der Ansprüche 1 bis 4, wobei das Verriegelungselement durch Wickeln eines Drahtes (220, 220A) um eine äußere Umfangsfläche des Zwischenabschnitts (213) gebildet ist.

6. Fluiddruck-Betätigungsvorrichtung (10) nach einem der Ansprüche 1 bis 5, wobei ein Endabschnitt der Hülse (120) in der Axialrichtung über das Verriegelungselement zurückgeklappt wird.

## Revendications

1. Actionneur de pression de fluide (10) comprenant :
une partie de corps d'actionneur (100) comprenant un tube (110) présentant une forme cylindrique et configuré pour se dilater et se contracter sous la pression d'un fluide,
et un manchon (120) qui est une structure dans laquelle des cordes orientées dans une direction prédéterminée sont tissées et recouvre une surface périphérique extérieure du tube (110) ; et
un mécanisme de scellement (200, 200A) qui scelle l'extrémité de la partie de corps d'actionneur (100) dans la direction axiale (D_{AX}) de la partie de corps d'actionneur (100),
dans lequel
le mécanisme de scellement (200, 200A) comprend :
un élément de scellement (210, 210A) sur lequel est insérée la partie de corps d'actionneur (100) ;
un élément de limitation (230) prévu sur une surface périphérique extérieure de la partie de corps d'actionneur (100) insérée sur l'élément de scellement (210, 210A) et qui limite la partie de corps d'actionneur (100) ; et
un élément de verrouillage (220) qui verrouille le manchon (120) sur l'élément de scellement (210, 210A),
l'élément de scellement (210, 210A) comprend :
une partie de corps (212) sur laquelle est inséré le tube (110) ;
une partie supérieure (211) prévue plus loin à l'extérieur que la partie de corps (212) dans la direction axiale (D_{AX}) et
une partie intermédiaire (213) prévue entre la partie de corps (212) et la partie supérieure (211), dans laquelle
la partie intermédiaire (213) :
est de taille plus petite dans la direction radiale (D_{R}) de la partie corps d'actionneur (100) que celle de la partie supérieure (211) ; et
présente une partie de diamètre élargi (214, 214A) plus grande que celle de la partie de corps (212) vers la direction radiale à l'extérieur de la partie de corps d'actionneur (100), et
l'élément de verrouillage (220) est configuré pour être comprimé et déformé afin de remplir un espace formé entre l'élément de limitation (230) et la partie intermédiaire (213),
**caractérisé en ce que** l'élément de verrouillage (220) est formé d'un matériau présentant une anisotropie dans laquelle la résistance dans la direction axiale (D_{AX}) est inférieure à celle de la direction radiale (D_{R}) pour faciliter la déformation par compression dans la direction axiale (D_{AX}).

2. Actionneur de pression de fluide (10) selon la revendication 1, dans lequel la partie de diamètre élargi (214, 214A) augmente en diamètre de la partie supérieure (211) vers la partie de corps (212).

3. Actionneur de pression de fluide (10) selon la revendication 1 ou 2, dans lequel la distance entre l'élément de limitation et la partie intermédiaire (213) diminue en diamètre de la partie supérieure (211) vers la partie de corps (212).

4. Actionneur de pression de fluide (10) selon l'une quelconque des revendications 1 à 3, dans lequel l'élément de verrouillage est formé d'un matériau contenant de l'aluminium.

5. Actionneur de pression de fluide (10) selon l'une quelconque des revendications 1 à 4, dans lequel l'élément de verrouillage est formé par enroulement d'un fil (220, 220A) autour d'une surface périphérique extérieure de la partie intermédiaire (213).

6. Actionneur de pression de fluide (10) selon l'une quelconque des revendications 1 à 5, dans lequel une partie d'extrémité du manchon (120) dans la direction axiale est repliée via l'élément de verrouillage.
